# EUROPEAN PATENT SPECIFICATION

(11) **EP 0 545 402 B1**
(45) Date of publication and mention of the grant of the patent: **05.06.1996**
(21) Application number: 92120636.3
(22) Date of filing: 03.12.1992
(51) Int. Cl.: F16F 15/12, F16D 13/68

(54) **Clutch disc assembly**
Kupplungsscheibeeinheit
Unité de disque d'embrayage

(30) Priority: 04.12.1991 JP 320699/91
(43) Date of publication of application: 09.06.1993
(73) Proprietor: AISIN SEIKI KABUSHIKI KAISHA, Kariya City Aichi Pref. (JP)
(72) Inventor: Suzuki, Hiroshi, Anjo City, Aichi pref. (JP)
(74) Representative: Tiedtke, Harro, Dipl.-Ing.

(56) References cited:
- EP-A- 0 104 823
- EP-A- 0 361 458
- DE-A- 3 505 356
- GB-A- 2 040 398
- GB-A- 2 103 760

## Description

The present invention relates to a clutch disk assembly according to the preamble of claim 1.

A conventional clutch disk assembly of the type is disclosed in EPC Patent Publication under the number of 0 498 772 Al which was published on August 12, 1992. In this clutch disk assembly, a first damper mechanism for establishing a first stage of the torsion characteristics is disposed between a hub flange and a control plate. The first damper mechanism is so designed as to prevent the generation of the rattling noise. The clutch disk assembly also includes a locking mechanism for rendering the first damper mechanism ineffective, while the vehicle is in the acceleration or deceleration condition, in order to prevent the transient surge or backing of the vehicle. The locking mechanism has a first weight and a second weight both of which are so pivoted to the hub flange as to be operated upon receipt of the centrifugal force, and a first aperture and a second aperture both of which are formed in the control plate. The first weight and the second weight are positioned in the first aperture and the second aperture, respectively. Upon initiation of the vehicle's acceleration (deceleration), the first (the second) weight is brought into engagement with the inner end of the first aperture (the second aperture) for the establishment of the torque transmission.

However, since a gap is defined between the distal end of the second weight and the inner end of the second aperture, if the vehicle is transfered from the acceleration condition to the deceleration condition, a low torsion rigidity corresponding to the gap is generated at the first damper mechanism, which results in that the transient surge is inevitably generated.

Furthermore, the DE-A-3 505 356 shows a clutch having a locking device which comprises a locking cam. The locking cam is actuated by a spring, with the spring force being created by the relative movement of a hub and an intermediate plate.

Moreover, each of GB-A-2 040 398, GB-A-2 103 760 and EP-A-0 104 823 show a clutch having a locking device which are similar to each other with respect to function and structure.

However, the invention proceeds from a state of the art as is shown in the GB-A-2 040 398. According to this state of the art, a clutch has two damping mechanism. The damping mechanism which is dimensioned for use in the condition of operation under no-load is switched off by a locking device in the condition of operation under load. The locking device has locking members which are radially slidable on a member keyed to a hub and which are restrained by springs to the member. The locking members are capable of centrifugally entering respective slots which are provided on a hub disc when the locking members are aligned with the respective slots.

An object of the present invention is to provide a clutch disc assembly which is capable of avoiding a transient surge by rendering a damping mechanism ineffective in a reliable and simple way.

The invention provides a clutch assembly according to claim 1.

The above and other objects, features and advantages of the present invention will be more apparent and more readily appreciated from the following detailed description of preferred exemplarily embodiment of the present invention, taken in connection with the accompanying drawings, in which;
Fig.1 is a front view, which is of a partial cross-section, of a clutch disk assembly according to the present invention;
Fig.2 is a cross-sectional view taken along line A - A in Fig.1;
Fig.3 is a view showing the condition of a centrifugal weight when a disk assembly is at its rest condition;
Fig. 4 is a view showing the condition of a centrifugal weight when a disk assembly is in an operating condition;
Fig. 5 is a view showing the condition of a centrifugal weight when a disk assembly is in another operating condition;
Fig.6 is a graph showing the torsion characteristics when the rotational number of the clutch disk assembly is less than a value; and
Fig.7 is a graph showing the torsion characteristics when the rotational number of the clutch disk assembly is not less than a value.

### DESCRIPTION OF THE PREFERRED EMBODIMENT

A preferable embodiment of the present invention will be described hereinunder in detail with reference to the accompanying drawings.

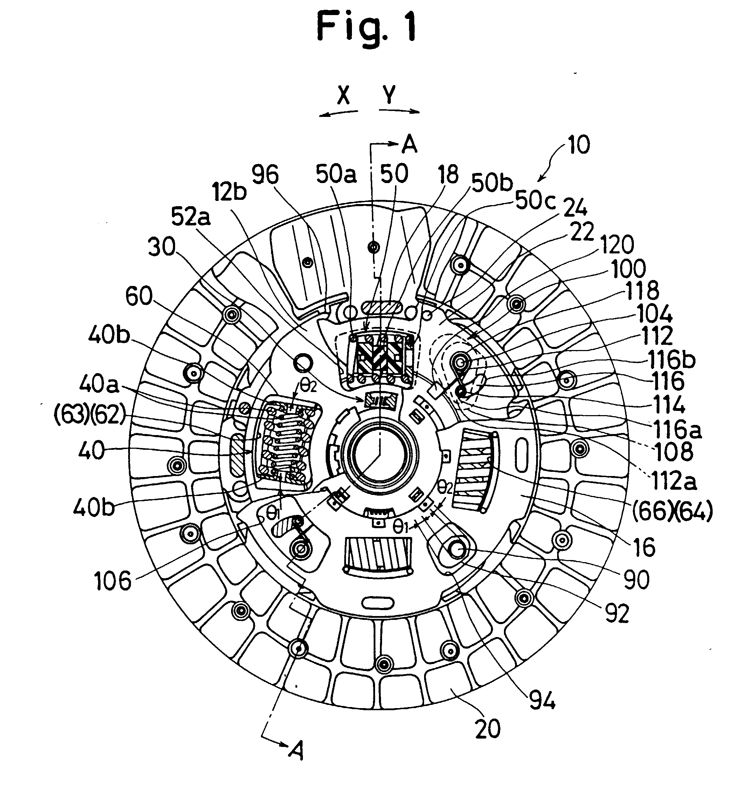

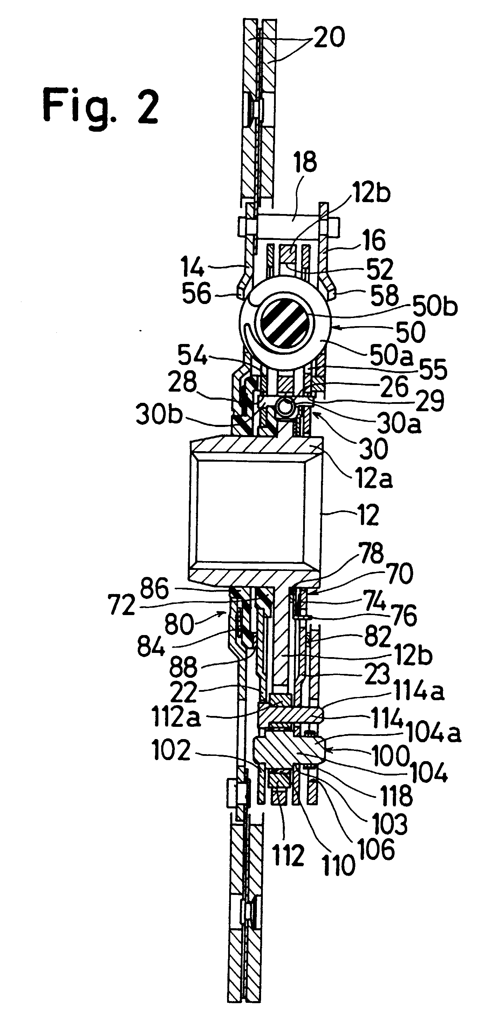

Referring first to Figs. 1 and 2, a clutch hub 12, which is formed into a flanged configuration, includes an inner boss portion 12a. A shaft (not shown) of a transmission system (not shown) is connected via the boss portion 12a to the clutch hub 12. The clutch hub 12 is provided with an outwardly extending flange portion 12b. The flange portion 12b is positioned between a disk plate 14 and a sub plate 16 which are connected each other by a plurality of equally pitched pins 18 (only one is shown). Facings 20 are provided on opposite surfaces of the disk plate 14 and are set to receive torque transmission from an element or a component (not shown) which belongs to an engine system (not shown) by engaging therewith. In addition, between the plates 14 and 16, a pair of axially spaced control plates 22 and 23 are arranged which are connected each other by a plurality of equally pitched pins 24 (only one is shown).

Between the flange portion 12b of the clutch hub 12 and each of the control plates 22 and 23, there is provided a common first damper mechanism 30 for generating torsion rigidity upon relative rotation therebetween. Another first damper mechanism 30 is positioned symmetrically with the first damper mechanism 30 with respect to the center of the clutch disk 10. Each first damper mechanism 30 includes a pair of circumferentially spaced spring seats 30b, and a coil spring 30a which is located therebetween. Each of the spring seats 30b has a projection which is fitted into the corresponding end portion of the coil spring 30a for the holding thereof. The spring seats 30b are clastically held at respective circumferential end of a slot 26 which is formed in the inner portion of the flange portion 12b. The spring seat 30b is also extends into an opening 28 of the control plate 22 and an opening 29 of the control plate 23 so as to be elastically held in both openings 28 and 29. The center of the opening 28, the center of the opening 29, and the center of the slot are in alignment one another.

In the present embodiment, for establishing a multi-stage torsion rigidity, in addition to the first damper mechanism 30, a second damper mechanism 40 and a third damper mechanism 50 are provided each of which is so designed as to generate a torsion rigidity which is larger than that of the first damper mechanism 30. Both the second damper mechanism 40 and the third damper mechanism 50 are located outside the first damper mechanism 30, and another second damper mechanism 40 and another third damper mechanism 50 are positioned symmetrically with the second damper mechanism 40 and the third damper mechanism 50 with respect to the center of the clutch disk 10.

The second damper mechanism 40 includes a pair of circumferentially spaced spring seats 40b and co-axially arranged coil springs 40a positioned therebetween. The spring seat 40b has a projection fitted in end of the inside positioned coil spring 40a, which establishes the holding of the coil springs 40a. A pair of radial flanges of each the spring seats 40b are held elastically within an aperture 62 in the control plate 22 and an aperture 63 in the control plate 23, respectively. Furthermore, the co-axially arranged springs 40a and the spring seats 40b are, as one unit, extends into an aperture 60 formed in the flange portion 12b, an aperture 64 formed in the disk plate 14 and an aperture 66 formed in the sub plate 16. Guide members are provided at outer sides of the apertures 64 and 66, respectively, for assuring smooth movement of the outside positioned coil spring 40a.

The third damper mechanism 50 is positioned substantially on a common circumference with respect to the second damper mechanism 40, and includes a coil spring 50a, a torsion rubber 50b positioned therein and a pair of spring seats 50c between which the rubber 50b is positioned. The torsion rubber 50b is set to be compressed between the spring seat 50c and an end 52a of the aperture 52 after the compression of the coil spring 50a in order to generate larger torsion rigidity than that of the first damper mechanism 30. In addition, Each of axial ends of the coil spring 50a and each of the seat 50c are elastically held in the aperture 54 in the control plate 22 and the aperture 55 in the sub plate 55.

Furthermore, the coil spring 50a, the torsion rubber 50b and the spring seats 50c, as one unit, extends into an aperture 52 formed in the flange portion 12b, an aperture 56 formed in the disk plate 14 and an aperture 58 formed in the sub plate 16. Guide members are provided at outer sides of the apertures 56 and 58, respectively, for assuring smooth movement of the outside positioned coil spring 50a.

The flange portion 12b of the clutch hub 12 is driven with a control pin 90 which extends in parallel with the axial direction of the clutch hub 12. In correspondence with the control pin 90, each of the control plates 22 and 23 is formed with an aperture 92, and each of the disk plate 14 and the sub plate 16 is formed with an aperture 94. While the clutch disk assembly 10 is at rest, the control pin 90 establishes angular gaps θ 1 and θ 2 with respect to the circumferential ends of the aperture 92, respectively. Similar gaps are established in connection with each of the second damper mechanism 40 and the third damper mechanism 50. Thus, the rotation of the flange portion 12b relative to the control plates 22 and 23 is set to be established within the operation range of the third damper mechanism 30.

The present embodiment further includes a first hysteresis mechanism 70 and a second hysteresis mechanism 80 for applying hysteresis to each damper mechanism.

The first hysteresis mechanism 70 is so positioned radially inward the first damper mechanism 30 as to be between the control plates 22 and 23. The first hysteresis mechanism 70 includes a bush 72 located between the control plate 22 and the flange portion 12b. The bush 72 is so secured to the control plate 22 as to be in engagement with the flange portion 12b. On the other hand, between the control plate 23 and the flange portion 12b, a corned disk spring 74, a thrust plate 76 and a washer 78 are arranged, in such order, toward the flange portion 12b. Thus, the thrust washer 78 is in elastic engagement with the flange portion 12b due to the corned disk spring 74, and upon rotation of the flange portion 12b relative to the control plates 22 and 23 a frictional force is generated between the flange portion 12b and each of the bush 72 and the thrust washer 78, thereby applying a hysteresis to the torsion rigidily generated by the first damper mechanism 30.

The second hysteresis mechanism 80 is so positioned radially outward the first damper mechanism 30 as to be between the control plates 22 and 23. The second hysteresis mechanism 80 includes a thrust washer 82 located between the control plate 23 and the sub plate 16. On the other hand, between the control plate 22 and the sub plate 14, a corned disk spring 84, a bush 86 and a thrust washer 88 are arranged, in such order, toward the flange 12b. It is to be noted that an inner side of the bush 86 is secured to the disk plate 14. Thus, the thrust washer 88 is in elastic engagement with the control plate 22 due to the corned disk spring 84, and upon rotation of each of the control plates 22 and 23 relative to the disk plate 14 and the sub plate 16 a frictional force is generated between the control plate 22 (23) and the thrust washer 82 (88), thereby applying a hysteresis to the torsion rigidity generated by cach of the second damper mechanism 40 and the third damper mechanism 50.

The frictional coefficient of each of the thrust washers 82 and 88 in the second hysteresis mechanism 80 is set to be larger than that of each of the bush 72 and the thrust washer 78 in the first hysteresis mechanism 70. The operation of the clutch disk assembly 10 is set to be initiated in such a manner that the rotation of each of the control plates 22 and 23 between which the first hysteresis mechanism 70 is provided relative to the flange portion 12b of the clutch hub 12, and the the control plates 22 and 23 are brought into a unitary movement with the flange portion 12b via the control pin 90, which results in the rotation of each of the disk plate 14 and the sub plate 16 between which the second hysteresis mechanism 80 relative to the control plates 22 and 23. The first damper mechanism 30, the co-axially arranged springs 40a and the coil spring 50a of the third damper mechanism 50, and the cushion rubber 50b of the third damper mechanism 50 are actuated in such order, which leads to the establishment of the three-stage torsion characteristics.

In addition, in order to prevent an excess rotation of each of the disk plate 14 and the sub plate 16 relative to the control plate 22 and 23, a pin 18 which connects the disk plate 14 and the sub plate 16 is set to be engageable with one of circumferential ends of a notch 96 formed at an outer peripheral portion of the flange portion 12b. In case of the excess rotation, the engagement of the pin 18 with the end of the notch 96 brings the unitary rotation of disk plate 14, the sub plate 16 and the flange portion 12b, which will ensure the prevention of a breakage of each damper mechanism.

Hereinafter, a centrifugal force operated locking mechanism 100 which is to be regarded as a gist of the present invention will be detailed.

Apertures 102 and 103 are formed in the control plates 22 and 23, respectively. Small radius projections of a shaft 104 are snugly fitted in the apertures 102 and 103, respectively, which leads to the connection of the shaft 104 to the control plates 22 and 23. One end of the shaft 104 at a side of the sub plate 16 is extended outwardly through an aperture 106 of the sub plate 16. In correspondence with the shaft 104, an aperture 108 is formed in the flange portion 12b of the clutch hub 12 and a centrifugal weight 112 as a cam shaped configuration is accommodated within the aperture 108 so as to be rotatable together with the shaft 104 via a bush 110. A distal end 112a of the centrifugal weight 112 is driven with a stopper pin 114. One end of the stopper pin 114 which is at a side of the sub plate 16 is, like the shaft 104, extended outwardly through the aperture 106. In correspondence with the stopper pin 114, the control plate 23 which is at a side of the sub plate 16 is formed with an aperture 116 which is designed for regulating the rotation range of the stopper pin 114 in accordance with the rotation of the weight 112. Around an extension 104a of the shaft 104, there is wound a return spring 118 whose one end is wound on an extension 114a of the stopper pin 114. The other end of the return spring 118 is fitted in an aperture 120 formed in the control plate 23 which is at a side of the sub plate 16 for the prevention of an interference of the return spring 118 with other elements. Thus, when the clutch disk assembly 10 is at rest, the stopper pin 114 is urged inwardly in the radial direction of the clutch disk assembly 10 due to the biasing force of the return spring 118 and is in engagement with a radially inside end 116a of the aperture 116. When the rotational number of the clutch disk assembly 10 exceeds a set value, the stopper pin 114 rotates about the shaft 104 until its engagement with a radial outside end 116b of the aperture 116.

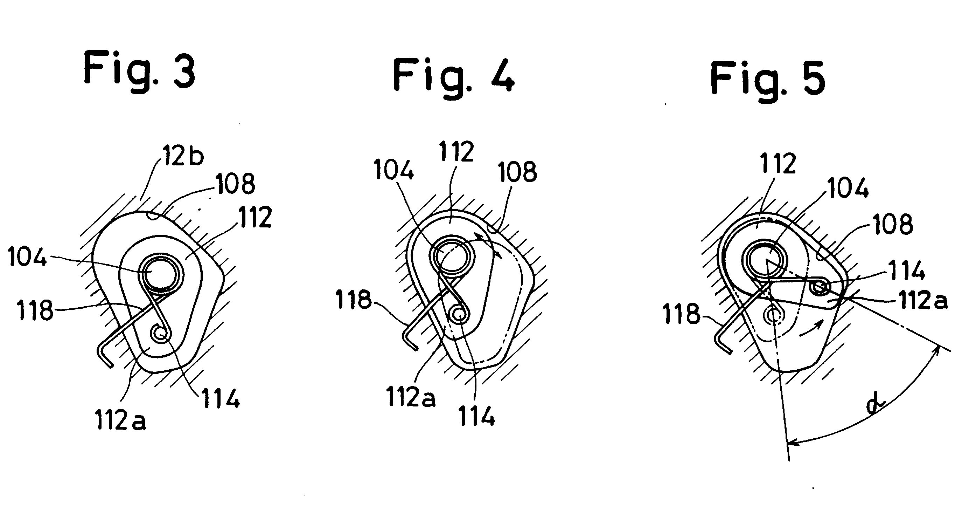

The relationship between the weight 112 and the aperture 108a in the flange portion 12b is illustrated in each of Fig. 3, Fig. 4, and Fig. 5. When the clutch disk assembly 10 is at rest, the weight 112 is at a position as shown in Fig. 3 relative to the aperture 108. Next, due to the rotation of each of the control plates 22 and 23 relative to the flange portion 12b, the weight 112 is transfered, relative to the aperture 108, to either the real-lined position or the dot-lined position as shown in Fig. 4. In this transfer, the weight 112 fails to be brought into engagement with the aperture 108. In case that the rotational speed of the clutch disk assembly 10 is in excess of the set value when the weight 112 is at the real-lined position in Fig. 4, as apparent from Fig. 5, as the engine rotation speed increases, the stopper pin 114 is rotated in the counter-clockwise or an arrowed direction through an angle α defined by the real-line position to the 2-dot-lined position. When the weight 112 is at the real-lined position, the stopper pin 114 is in engagement with the end 116b of the aperture 116, and under such condition scarcely gap is defined between the distal end 112a of the weight 112 and the aperture 108. Thus, the configuration or inner periphery of the aperture 108 is so designed as to avoid the engagement thereof with the weight 112 which is set to be rotated together with each of the control plates 22 and 23, and when the stopper pin 114 is rotated about the shaft 104 to the end 116b of the aperture 116 scarcely the gap is defined between the distal end 112a of the weight 112 and the inner periphery of the aperture 108.

Hereinafter an operation of the clutch disk assembly will be detailed. When an amount of torque is transmitted to the facing 20 of the clutch disk 10 for accelerating the vehicle, the disk plate 14 is brought into rotation in the counter-clockwise direction indicated by "X" in Fig.1 . In case of the slow down of the vehicle, the disk plate 14 is rotated in the clockwise direction indicated by "Y" un Fig. 1.

As the disk plate 14 rotates in the counter-clockwise direction "X" the coil spring 30a of the first damper mechanism 30 is being compressed which is so designed as to be inferior to the second damper mechanism 40 in torsion characteristics. Simultaneously, a relative sliding rotation is established between the flange portion 12b of the clutch hub 12 and each of the bush 72 and the thrust washer 78 of the first hysteresis mechanism 70. Thus, the first torsion characteristics is generated. The control plates 22 and 23 continue to rotate relative to the flange portion 12b of the clutch hub 12 until the other end of the aperture 92 of each of the control plates 22 and 23 is brought into engagement with the control pin 90.

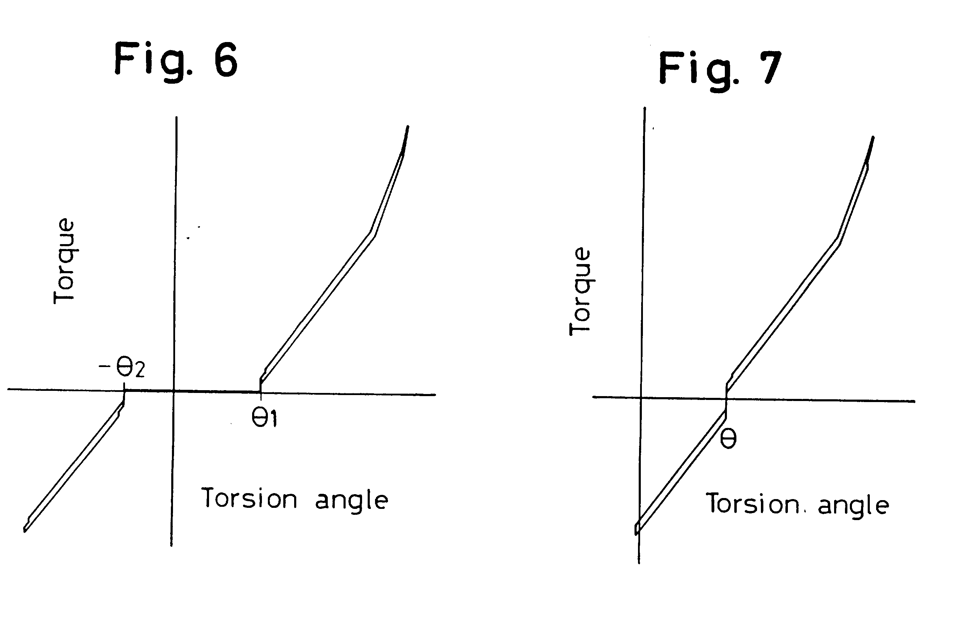

Accordingly, as apparent from the graph in Fig.6 which shows the relationship between the torsion characteristics, the clutch disk assembly 10 can generate a relatively small torque or torsion rigidity within the torsion angle ranging from θ 1 through - θ 2 . It is to be noted that in this case the counter-clockwise direction "X" and the clockwise direction "Y" in Fig.1 are regarded, respectively, as the positive and negative directions. Thus, the vibration generated when engine idling which corresponds to the angular range from θ 1 through - θ 2 can be absorbed.

During the vehicle's acceleration, after one end of each of the aperture 92 is engaged with the pin 90 of the flange portion 12b of the clutch hub 12, if the disk plate 14 rotates further in the counter-clockwise direction "X", each of the disk plate 14 and the sub plate 16 rotates relative to the control plates 22 and 23 and the flange portion 12b of the clutch hub 12. At this time, the angular gap θ 1 between the opening 60 of the flange portion 12b of the clutch hub 12 and each of the openings 62 and 63 of the respective control plates 22 and 23 between which the second damper mechanism 40 is elastically held is in coincident with the angular gap θ 1 between the control pin 90 and the aperture 92, which results in that the rotation of each of the control plate 22 and 23 and the flange portion 12b relative to the disk plate 14 and the sub plate 16 establishes the elastic compression of the co-axially arranged coil springs 40a of the second damper mechanism 40. Similarly, the coil spring 50a of the third damper mechanism 50 is elastically compressed. Thus, the compression of each of the co-axially arranged coil springs 40 and the coil spring 50 establishes the second stage torsion characteristics. Furthermore, after the elastic compression of the coil spring 50a exceeds the set value, the torsion rubber 50b is brought into the elastic compression due to the rotating the spring seat 50c, resulting in the establishment of the third stage torsion characteristics. Within the ranges of both the second stage torsion characteristics and the third stage torsion characteristics, due to the frictional rotations of the thrust washers 82 and 88 of the second hysteresis mechanism 80 relative to the respective control plates 22 and 23, the second hysteresis is being generated.

Similarly, during the vehicle's acceleration, after one end of each of the aperture 92 is engaged with the pin 90 of the flange portion 12b of the clutch hub 12, if the disk plate 14 rotates further in the clockwise direction "Y", each of the disk plate 14 and the sub plate 16 rotates relative to the control plates 22 and 23 and the flange portion 12b of the clutch hub 12. At this time, the angular gap θ 2 between the opening 60 of the flange portion 12b of the clutch hub 12 and each of the openings 62 and 63 of the respective control plates 22 and 23 between which the second damper mechanism 40 is elastically held is in coincident with the angular gap θ 2 between the control pin 90 and the aperture 92, which results in that the rotation of each of the control plate 22 and 23 and the flange portion 12b relative to the disk plate 14 and the sub plate 16 establishes the elastic compression of the co-axially arranged coil springs 40a of the second damper mechanism 40. Similarly, the coil spring 50a of the third damper mechanism 50 is elastically compressed. Thus, the compression of each of the co-axially arranged coil springs 40 and the coil spring 50 establishes the second stage torsion characteristics. Furthermore, after the elastic compression of the coil spring 50a exceeds the set value the torsion rubber 50b is brought into the elastic compression due to the rotating the spring seat 50c, resulting in the establishment of the third stage torsion characteristics. Whithin the ranges of both the second stage torsion characteristics and the thirs stage torsion characteristics, due to the frictional rotations of the thrust washers 82 and 88 of the second hysteresis mechanism 30 relative to the respective control plates 22 and 23, the second hysteresis is being generated.

Accordingly, as apparent from the graph in Fig. 6 which shows the torsion characteristics of the clutch disk 10, when the torsion angle of the clutch disk 10 becomes more than θ 1 or less than - θ 2, the co-axially arranged coil springs 40a of the second damper mechanism 40 and the coil spring 50a of the third damper mechanism 50 generate the torque. if the torsion angle is further increased, due to the actuation of the torsion rubber 50b, more larger torque is generated. Thus, the vibration caused by the engine rotation corresponding to the vehicle speed can be absorbed.

Under either the vehicle accelerating condition or the vehicle deceleration condition, further rotation of each of the disk plate 14 and the sub plate 16 relative to the control plates 22 and 23 establishes the engagement of the pin 18 with either end of the notch of the flange portion 12b, resulting in that the disk plate 14, sub plate 16, the control plate 22 and 23, the clutch hub 12 constitute the unitary rotation. Thus, the torsion angle of the clutch disk 10 varies within the range as apparent from Fig.6, which assures the breakage of each damper mechanism of the clutch disk 10.

Next, under the vehicle acceleration condition, if the torsion angle of the clutch disk 10 exceeds θ 1, each of the control plates 22 and 23 rotates relative to the flange portion 12b. Then, the centrifugal weight 112 of the cam mechanism 100 rotates together with the control plates 22 and 23 relative to the aperture 108 of the flange portion 12b, and the position of the centrifugal weight 112 is transfered from the real-lined position in Fig.3 to the real-line position in Fig.4. Furthermore, if the engine speed becomes in excess of a set value, the centrifugal force applied to the centrifugal weight 112 becomes larger than the biasing force of the spring 118, which leads to the rotation of the centrifugal weight 112 about the shaft 104. Thus, the stopper pin 114 is rotated within the aperture 116 and the position of the centrifugal weight 112 is transfered to the real-lined position in Fig.5. Under the resultant condition, the space or gap is scarcely defined between the distal end 112a of the centrifugal weight 112 and the inner surface of the aperture 108. Under such condition, when the vehicle under acceleration is brought into deceleration, this condition prevents the control plates 22 and 23 to both of which the centrifugal weight 112 is secured from rotating relative to the flange portion 12b in which the aperture 108 is formed. Thus, the prevention of the relative rotation of each of the control plates 22 and 23 to the flange portion 12b which renders the first damper mechanism 30 ineffective, resulting in that the torque can be generated only by both of the second damper mechanism 40 and the third damper mechanism 50 as apparent from the graph showm in Fig.7.

As mentionned above, in the present invention, the direct connection of the centrifugal weight 112 to both control plates 22 and 23 assures the correct or desired rotation number of the centrifugal weight 112. In addition, the locking mechanism fills up the space which is defined by the distal end 112a of the centrifugal weight 112 which rotates together with control plates and the inner surface of the aperture formed in the flange portion of the hub plate, which the first damper mechanism is brought into ineffective upon the first deceleration condition of the vehicle after its starting.

The invention has thus been shown and described with reference to a specific embodiment, however, it should be noted that the invention is in no way limited to the details of the illustrated structures but changes and modifications may be made without departing from the scope of the appended claims.

## Claims

1. A clutch assembly comprising:
a clutch hub (12) having a flange portion (12b);
a control plate (22, 23) disposed at a side of the flange portion (12b);
a first damper mechanism (30) disposed between the flange portion (12b) and the control plate (22, 23) for generating a first torsional rigidity between the flange portion (12b) and the control plate (22, 23) upon relative rotation therebetween;
a second damper mechanism (40) operated subsequently to the first damper mechanism (30) and disposed between the flange portion (12b) and the control plate (22, 23) for generating a second torsional rigidity which is larger than the first torsional rigidity ;
a locking mechanism (108, 112) for rendering the first damper mechanism (30) ineffective when the vehicle is in travel;
the locking mechanism having a weight (112) which is shiftable by a centrifugal force outwardly in the radial direction, and a means (118) for biasing the weight (112) inwardly in the radial direction,
characterized in that
the locking mechanism further includes an aperture (108) provided in the flange portion (12b), wherein the weight (112) is rotatably supported on the control plate (22, 23) via a shaft (104), the weight is eccentric from the shaft (104), a center of gravity of the weight is located at an inner side of the shaft when the weight is not rotated and the weight is rotatable by the centrifugal force within the aperture (108) in such a manner that a gap is defined between an inner periphery of the aperture (108) and the weight (112a) so as to be substantially filled when the weight is rotated.

## Patentansprüche

1. Kupplungseinheit mit
einer Kupplungsnabe (12) mit einem Flanschabschnitt (12b), einer Steuerplatte (22, 23), die an einer Seite des Flanschabschnittes (12b) angeordnet ist,
einem ersten Dämpfungsmechanismus (30), der zwischen dem Flanschabschnitt (12b) und der Steuerplatte (22, 23) angeordnet ist und bei einer Relativdrehung dazwischen eine erste Torsionssteifigkeit zwischen dem Flanschabschnitt (12b) und der Steuerplatte (22, 23) erzeugt,
einem zweiten Dämpfungsmechanismus (40), der nach dem ersten Dämpfungsmechanismus (30) wirkt und zwischen dem Flanschabschnitt (12b) und der Steuerplatte (22, 23) angeordnet ist, um eine zweite Torsionssteifigkeit zu erzeugen, die größer ist als die erste Torsionssteifigkeit,
einem Verriegelungsmechanismus (108, 112), um den ersten Dämpfungsmechanismus (30) unwirksam zu machen, wenn sich das Fahrzeug bewegt, der ein Gewicht (112) aufweist, das durch eine Zentrifugalkraft in Radialrichtung nach außen verschiebbar ist, und
einer Einrichtung (118) zum Vorspannen des Gewichtes (112) in Radialrichtung nach innen,
dadurch gekennzeichnet, daß
der Verriegelungsmechanismus des weiteren eine Öffnung (108) umfaßt, die im Flanschabschnitt (12b) vorgesehen ist, worin das Gewicht (112) über eine Welle (104) drehbar an der Steuerplatte (22, 23) gelagert und gegenüber der Welle (104) exzentrisch ist, daß der Schwerpunkt des Gewichtes an der Innenseite der Welle angeordnet ist, wenn das Gewicht nicht gedreht wird, und daß das Gewicht durch die Zentrifugalkraft in der Öffnung (108) derart drehbar ist, daß ein zwischen dem Innenumfang der Öffnung (108) und dem Gewicht (112a) gebildeter Spalt im wesentlichen ausgefüllt wird, wenn das Gewicht gedreht wird.

## Revendications

1. Ensemble à embrayage comprenant :
un moyeu d'embrayage (12) ayant une partie à flasque (12b);
une plaque de commande (22, 23) disposée à un côté de la partie à flasque (12b);
un premier mécanisme amortisseur (30) disposé entre la partie à flasque (12b) et la plaque de commande (22, 23) pour produire une première rigidité en torsion entre la partie à flasque (12b) et la plaque de commande (22, 23) lors de la rotation relative entre elles;
un second mécanisme amortisseur (40) fonctionnant à la suite du premier mécanisme amortisseur (30) et disposé entre la partie à flasque (12b) et la plaque de commande (22, 23) pour produire une seconde rigidité en torsion supérieure à la première rigidité en torsion;
un mécanisme de blocage (108, 112) pour rendre inopérant le premier mécanisme amortisseur (30) lorsque le véhicule se déplace;
le mécanisme de blocage comportant une masse (112) qui peut être décalée par la surface centrifuge vers l'extérieur dans la direction radiale, et un moyen (118) pour solliciter la masse (112) vers l'intérieur dans la direction radiale,
caractérisé en ce que :
le mécanisme de blocage présente en outre une ouverture (108) ménagée dans la partie à flasque (12b), où la masse (112) est supportée en rotation sur la plaque de commande (22, 23) via un arbre (104), la masse est excentrique par rapport à l'arbre (104), le centre de gravité de la masse est situé au côté intérieur de l'arbre lorsque la masse ne tourne pas et la masse peut être mise en rotation par la force centrifuge à l'intérieur de l'ouverture (108) d'une manière telle qu'un interstice est défini entre la périphérie intérieure de l'ouverture (108) et la masse (112a) de façon à être sensiblement rempli lorsque la masse est animée d'un mouvement de rotation.
